# EUROPEAN PATENT APPLICATION

(11) **EP 2 421 177 A1**
(43) Date of publication of application: **22.02.2012**
(21) Application number: 10764114.4
(22) Date of filing: 16.04.2010
(51) Int. Cl.: H04B 7/14

(54) **METHOD, SYSTEM AND DEVICE FOR DETERMINING COOPERATIVE TRANSMISSION NODE**

(30) Priority: 17.04.2009 CN 200910082005
(71) Applicant: China Academy of Telecommunications Technology, Haidian District, Beijing 100083 (CN)
(72) Inventor: PAN, Xueming, Beijing 100083 (CN); SHEN, Zukang, Beijing 100083 (CN)
(74) Representative: Pfenning, Meinig & Partner GbR
(86) International application number: PCT/CN2010/071843
(87) International publication number: WO 2010/118701

(57) **Abstract**

A method, a system and a device for determining cooperative transmission node are provided, wherein, the method includes: a base station sends configuration information of uplink signal for a user terminal to the user terminal and each relay node device belonging to the base station; said base station and said each relay node device receive the uplink signal sent by the user terminal according to said configuration information of uplink signal, and measure the uplink signal; the measurement result of obtained by said base station is compared with the measurement result of each relay node device, and the cooperative transmission node for the user terminal is determined according to the result of the comparison. The present invention can determine the optimal node device set which participates in cooperation, and also modify the optimal cooperative transmission node set for a user terminal in real time, and enables transparent cooperative transmission for the user terminal.

## Description

### Field

The present invention relates to the field of communications and particularly to a method, system and device for determining cooperative transmission nodes.

### Background

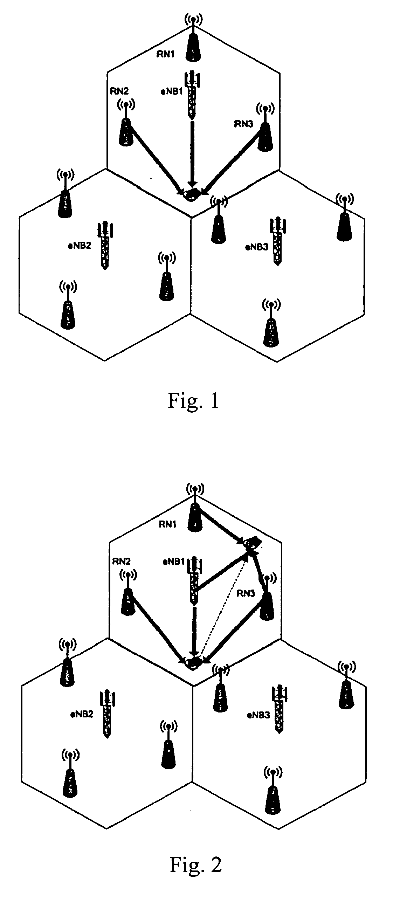

The International Telecommunication Union (ITU) has proposed a very rigorous requirement on the performance of a next-generation mobile communication system of IMT-Advanced, for example, a required maximum transmission bandwidth of the system up to 100 MHz, and required peak rates of uplink and downlink data transmission up to 1 Gbps/Hz and 500 Mbps/Hz, and also a very high demand for an average spectrum efficiency, particularly an edge spectrum efficiency, of the system. In order to satisfy the requirements of the IMT-Advanced system, the 3GPP has proposed in its next-generation mobile cellular communication system of LTE-Advanced the use of relayed cooperative transmission to improve the performance of the system. A plurality of Relay Nodes are deployed in a cell to cooperate with a Donor evolved NodeB (eNB) to transmit a signal to a User Equipment (UE) to thereby improve effectively the capacity of the system and the spectrum efficiency of an edge user. As illustrated in Fig. 1, for example, a UE resides in a cell which is hosted by an eNB1 and in which three Relay Nodes (RNI-RN3) are deployed, and during transmission of a downlink signal from the eNB1 to the UE, the RN2 and the RN3 participate in cooperative transmission so as to transmit concurrently the signal to the UE, thereby enhancing the quality of receiving the signal by the UE and hence improving the throughput.

At present the 3GPP is in discussion about creating no new cell for a cooperative relay node as defined and prefers cooperative transmission transparent to the UE, that is, the UE knows neither whether a cooperative transmission mode is active nor which relay node participates in cooperative transmission thereto.

A relay node optimum for cooperative transmission may be changeable due to a changing channel, the mobility of the UE, etc. As illustrated in Fig. 2, for example, relay nodes optimum for cooperative transmission are changed from the RN2 and the RN3 to the RN1 and the RN3 as the UE moves, and if the base station does not switch any cooperative node but the nodes RN2 and RN3 still cooperate for the UE, then a long distance of the RN2 from the UE results in a poor channel so that the cooperative RN2 has no effective contribution to an improved reception quality of the UE and also has its extra physical resource consumed while increasing an interference level in the system. Therefore the base station has to switch the cooperative nodes from the RN2 and the RN3 to the RN1 and the RN3 to thereby better improve the downlink throughput of the user while keeping the switch unknowable to the UE.

In the prior art, a base station does not know how to select a relay node for participation in cooperative transmission, and consequently there is no way so far to perform the foregoing relay node switching transparent to a UE.

### Summary

The invention provides a method, system and device for determining cooperative transmission nodes to address the problem in the prior that no cooperative transmission nodes can be selected.

A method for determining cooperative transmission nodes according to an embodiment of the invention includes:

transmitting, by a base station, uplink signal configuration information for a user equipment to the user equipment and respective relay node devices subordinated to the base station;

receiving, by the base station and the respective relay node devices, an uplink signal transmitted from the user equipment according to the uplink signal configuration information and measuring, by the base station and the respective relay node devices, the uplink signal; and

comparing a result of the measuring by the base station with results of the measuring by the respective relay node devices and determining nodes performing cooperative transmission for the user equipment according to a result of the comparing.

A system for determining cooperative transmission nodes according to an embodiment of the invention includes a base station and at least one relay node device subordinated to the base station, wherein:

the base station is configured to transmit uplink signal configuration information for a user equipment to the user equipment and the respective relay node devices subordinated to the base station, to receive an uplink signal transmitted from the user equipment according to the uplink signal configuration information and measure the uplink signal, and to compare its own measurement result with acquired measurement results of the respective relay node devices and determine nodes performing cooperative transmission for the user equipment according to a comparison result; and

the relay node device is configured to receive the uplink signal transmitted from the user equipment according to the uplink signal configuration information and to transmit a measurement result of measuring the uplink signal to the base station.

A method for determining cooperative transmission nodes according to an embodiment of the invention includes:

transmitting, by a base station, uplink signal configuration information for a user equipment to the user equipment and respective relay node devices subordinated to the base station, wherein the uplink signal configuration information is available to the respective relay node devices for their reception of an uplink signal from the user equipment; and

measuring, by the base station, the uplink signal which is transmitted from the user equipment and is received according to the uplink signal configuration information, comparing, by the base station, its own measurement result with received measurement results transmitted from the respective relay node devices and determining, by the base station, nodes performing cooperative transmission for the user equipment according to a result of the comparing,

wherein the measurement results transmitted from the respective relay node devices are measurement results of measuring by the respective relay node devices the received uplink signal transmitted from the user equipment.

A base station according to an embodiment of the invention includes:

an information transmission unit configured to transmit uplink signal configuration information for a user equipment to the user equipment and respective relay node devices, wherein the uplink signal configuration information is available to the respective relay node devices for their reception of an uplink signal from the user equipment;

a measurement unit configured to receive the uplink signal transmitted from the user equipment according to the uplink signal configuration information and to measure the uplink signal;

a measurement information acquisition unit configured to receive measurement results transmitted from the respective relay node devices, wherein the measurement results transmitted from the respective relay node devices are measurement results of measuring by the respective relay node devices the received uplink signal transmitted from the user equipment; and

a node and transmission scheme determination unit configured to compare a measurement result of the measurement unit with the acquired measurement results of measuring by the respective relay node devices the uplink signal and to determine nodes performing cooperative transmission for the user equipment according to a comparison result.

A method for determining cooperative transmission nodes according to an embodiment of the invention includes:

receiving, by a relay node device, an uplink signal of a user equipment according to uplink signal configuration information for the user equipment after acquiring the uplink signal configuration information; and

measuring, by the relay node device, the uplink signal, and transmitting, by the relay node device, a result of the measuring to a donor base station, wherein the measurement result is available to the base station which in turn compares its own measurement result with the received measurement results transmitted from respective relay node devices and determines nodes performing cooperative transmission for the user equipment according to the comparison result.

A relay node device according to an embodiment of the invention includes:

an information reception unit configured to receive uplink signal configuration information for a user equipment transmitted from a base station;

a reception and measurement unit configured to receive an uplink signal transmitted from the user equipment according to the uplink signal configuration information and to measure the uplink signal; and

an information transmission unit configured to transmit the measurement result to the base station, wherein the measurement result is available to the base station which in turn compares its own measurement result with the received measurement results transmitted from respective relay node devices and determines nodes performing cooperative transmission for the user equipment according to the comparison result.

In the embodiments of the invention, both the base station and the relay node devices subordinated to the base station receive the uplink signal, measure the received uplink signal and decide an optimum set of node devices participating in cooperation according to the measurement results.

In the embodiments of the invention, an optimum set of cooperative transmission nodes for a user equipment can be adjusted in real time to thereby perform cooperative transmission transparent to the user equipment.

### Brief Description of the Drawings

Fig. 1 illustrates a schematic diagram of relayed cooperative transmission;

Fig. 2 illustrates a schematic diagram of cooperative transmission nodes being changed due to the mobility of a UE;

Fig. 3 illustrates a schematic diagram of a flow of determining cooperative transmission nodes according to an embodiment of the invention;

Fig. 4 illustrates a schematic diagram of a flow of cooperative transmission performed according to an embodiment of the invention;

Fig. 5 illustrates a schematic diagram of the structure of a base station according to an embodiment of the invention;

Fig. 6 illustrates a schematic diagram of the structure of a relay node device according to an embodiment of the invention;

Fig. 7 illustrates a specific implementation of an embodiment of the invention at the side of a base station as an example; and

Fig. 8 illustrates a specific implementation of determining cooperative transmission nodes according to the invention at the side of a relay node device as an example.

### Detailed Description

In embodiments of the invention, a base station transmits uplink signal configuration information for a user equipment to the user equipment and respective relay node devices subordinated to the base station; the base station and the respective relay node devices measure a received uplink signal transmitted from the user equipment, and the base station compares its own measurement result with the acquired measurement results of the respective relay node devices and determines nodes performing cooperative transmission for the user equipment according to the comparison result.

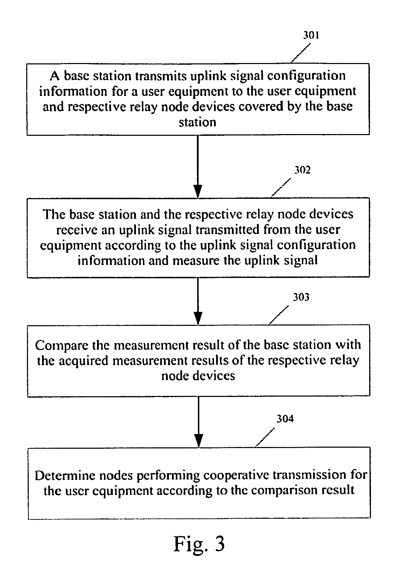

Referring to Fig. 3, a specific flow of determining cooperative transmission nodes according to an embodiment of the invention is as follows.

Operation 301: A base station transmits uplink signal configuration information for a user equipment to the user equipment and respective relay node devices subordinated to the base station.

Here the uplink signal configuration information may include transmission time configuration information and may further include resource configuration information.

A base station may transmit uplink signal configuration information for a user equipment to the user equipment and respective relay node devices subordinated to the base station in such a way that the base station transmits control signaling including the uplink signal configuration information for the user equipment to the user equipment, and the respective relay node devices subordinated to the base station listen to the control signaling and acquires the uplink signal configuration information. Alternatively the base station transmits the uplink signal configuration information for the user equipment respectively to the user equipment and the respective relay node devices subordinated to the base station.

Here in order to enable the base station and the respective relay node devices to receive an uplink signal of the user equipment, each of the base station and the respective relay node devices may set its own period of time corresponding to time configuration information in the uplink signal configuration information for the user equipment to a reception status with respect to the user equipment after the uplink signal configuration information is transmitted to the user equipment and the respective relay node devices, and thereafter the base station and the respective relay node devices can receive an uplink signal. Alternatively, no reception status is required to be set as long as an uplink signal of the user equipment can be received according to the time information in the uplink signal configuration information for the user equipment.

Operation 302: The base station and the respective relay node devices receive an uplink signal transmitted from the user equipment according to the uplink signal configuration information and measure the uplink signal.

Of course, a variety of aspects of the uplink signal can be measured, for example, the received power of the uplink signal can be measured, or the received signal-to-noise ratio of the uplink signal can be measured.

Operation 303: The measurement result of the base station is compared with the acquired measurement results of the respective relay node devices.

The base station may receive the measurement results directly from the respective relay node devices to thereby acquire the measurement results of the respective relay node devices or firstly transmit a measurement result request to respective relay node devices and then receive the measurement results returned from the respective relay node devices in response to the measurement result request.

Of course, the base station may be preconfigured to request the respective relay node devices for the measurement results periodically or each time the uplink signal of the user equipment is measured, or, the relay node devices may be configured to transmit the measurement results to the base station each time the uplink signal is measured or transmit the measurement results for a period of time to the base station on their own initiatives at a specific instance of time.

Operation 304: Nodes performing cooperative transmission for the user equipment is determined according to the comparison result.

Nodes determined by the base station to perform cooperative transmission for the user equipment refers to nodes participating in cooperative transmission of an uplink signal of the user equipment and may include only the base station or both the base station and at least one relay node device or at least one relay node device but not the base station.

The base station may determine nodes performing cooperative transmission for the user equipment according to the comparison result with a specific strategy.

For example, when the measurement result is the received power of the uplink signal, nodes with the measured received powers of the uplink signal higher than a preset power threshold can be determined as node devices performing cooperative transmission for the user equipment; or the received powers of the uplink signal measured by the respective nodes can be ordered, and a preset number of nodes can be selected in a descending order of the powers as node devices performing cooperative transmission for the user equipment.

In another example, when the measurement result is the received signal-to-noise ratio of the uplink signal, nodes with the measured received signal-to-noise ratios of the uplink signal higher than a preset received signal-to-noise ratio threshold can be determined as node devices performing cooperative transmission for the user equipment; or the received signal-to-noise ratios of the uplink signal measured by the respective nodes can be ordered, and a preset number of nodes can be selected in a descending order of the ratios as node devices performing cooperative transmission for the user equipment.

In an embodiment of the invention, after determining nodes performing cooperative transmission for the user equipment according to the comparison result, the base station can determine a scheme, in which nodes performing cooperative transmission for the user equipment transmit data to the user equipment, as, for example, transmission diversity, spatial multiplexing, etc., according to its own measurement result and the acquired measurement results of the respective relay nodes. Alternatively the base station can determine nodes for transmitting a downlink control channel (PDCCH) to the user equipment, according to its own measurement result and the acquired measurement results of the respective relay node devices.

In order to adjust in real time current cooperative transmission nodes optimum for the user equipment, the base station can adjust in real time the cooperative transmission nodes by returning to the operation 301 after performing the operation 304.

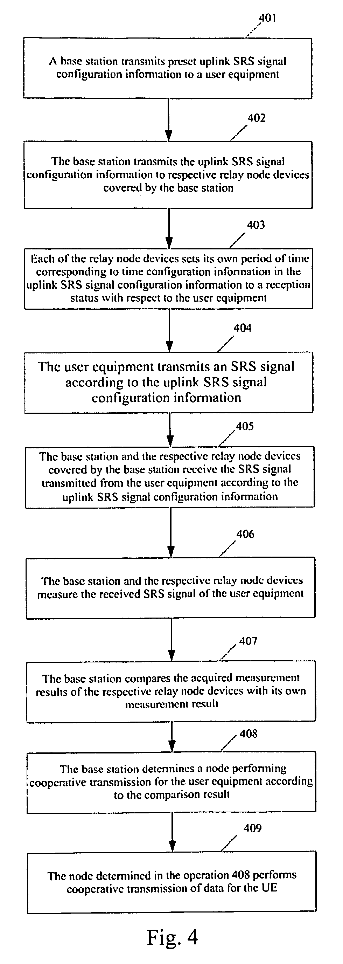

The uplink signal may be any uplink transmission signal of the user equipment, and a specific implementation of an embodiment of the invention will be detailed below with reference to Fig. 4 by way of an example where the uplink signal is an SRS signal and the uplink signal configuration information is uplink SRS signal configuration information.

Operation 401: A base station transmits preset uplink SRS signal configuration information to a user equipment, where the uplink SRS signal configuration information includes SRS transmission time configuration information and resource configuration information.

The resource configuration information includes one or more of SRS sequence configuration information, SRS transmission bandwidth configuration information, SRS transmission sub-carrier configuration information and SRS frequency-hopping configuration information.

The SRS time configuration information may be an SRS transmission location, e.g., the location of a symbol or a sub-frame in which an SRS is transmitted, etc., or SRS transmission time information, e.g., a periodical interval of time, which represents a specific interval of time at which an SRS is transmitted, or a non-periodical time information, etc.

For TDD and TDD systems, a time location at which the UE transmits an SRS may be configured in a normal uplink sub-frame; and for a TDD system, a time location at which the UE transmits an SRS may also be configured in an uplink section of a special sub-frame, i.e., in a timeslot of UpPTS.

Operation 402: The base station transmits the uplink SRS signal configuration information to respective relay node devices subordinated to the base station.

Operation 403: Each of the relay node devices sets its own period of time corresponding to time configuration information in the uplink SRS signal configuration information to a reception status with respect to the user equipment.

Operation 404: The user equipment transmits an SRS signal according to the uplink SRS signal configuration information.

Operation 405: The base station and the respective relay node devices subordinated to the base station receive the SRS signal transmitted from the user equipment according to the uplink SRS signal configuration information.

Operation 406: The base station and the respective relay node devices measure the received SRS signal of the user equipment, e.g., they may measure the received power of the SRS signal or the received signal-to-noise ratio of the SRS signal.

Operation 407: The base station compares the acquired measurement results of the respective relay node devices with its own measurement result.

Operation 408: The base station determines nodes performing cooperative transmission for the user equipment according to the comparison result, where the determined nodes may include only the base station or the base station and at least one relay node device or at least one relay node device but not the base station.

Operation 409: The nodes determined in the operation 408 perform cooperative transmission of data for the UE.

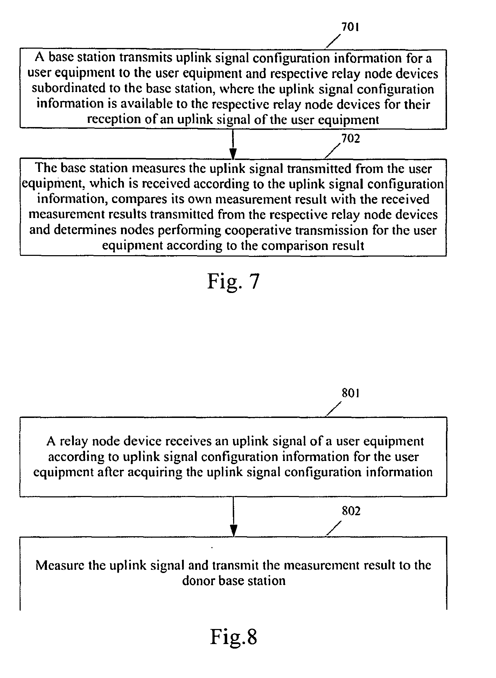

Fig. 7 illustrates a specific implementation of an embodiment of the invention at the side of a base station as an example. Referring to Fig. 7, a method for determining cooperative transmission nodes according to an embodiment of the invention particularly includes the following operations 701 to 702.

Operation 701: A base station transmits uplink signal configuration information for a user equipment to the user equipment and respective relay node devices subordinated to the base station, where the uplink signal configuration information is available to the respective relay node devices for their reception of an uplink signal of the user equipment.

After transmitting uplink signal configuration information for a user equipment to the user equipment and respective relay node devices subordinated to the base station and before measuring the uplink signal transmitted from the user equipment, the base station can set its own period of time corresponding to time location information in the uplink signal configuration information to a reception status with respect to the user equipment and then receives the uplink signal transmitted from the user equipment in the reception status with respect to the user equipment.

Operation 702: The base station measures the uplink signal transmitted from the user equipment, which is received according to the uplink signal configuration information, compares its own measurement result with the received measurement results transmitted from the respective relay node devices and determines nodes performing cooperative transmission for the user equipment according to the comparison result, where the measurement results transmitted from the respective relay node devices are measurement results of measuring by the respective relay node devices the received uplink signal transmitted from the user equipment.

After nodes performing cooperative transmission for the user equipment are determined according to the comparison result, a scheme in which the nodes performing cooperative transmission for the user equipment transmit data to the user equipment can further be determined according to the measurement result of the base station and the acquired measurement results of the respective relay node devices. Alternatively, nodes for transmitting a downlink control channel to the user equipment and a specific transmission scheme thereof can further be determined according to the measurement result of the base station and the acquired measurement results of the respective relay node devices.

Fig. 8 illustrates a specific implementation of determining cooperative transmission nodes according to the invention at the side of a relay node device as an example. Referring to Fig. 8, a method for determining cooperative transmission nodes according to an embodiment of the invention particularly includes the following operations 801 to 802.

Operation 801: A relay node device receives an uplink signal of a user equipment according to uplink signal configuration information for the user equipment after acquiring the uplink signal configuration information.

The relay node device can acquire the uplink signal configuration information by listening to control signaling transmitted from a donor base station to the user equipment, which includes the uplink signal configuration information for the user equipment, or can receive directly the uplink signal configuration information for the user equipment transmitted from the donor base station.

After receiving the uplink signal configuration information for the user equipment and before receiving the uplink signal of the user equipment according to the uplink signal configuration information, the relay node device can set its own period of time corresponding to time location information in the uplink signal configuration information to a reception status and then receive the uplink signal transmitted from the user equipment in the reception status with respect to the user equipment.

Operation 802: The uplink signal is measured, and the measurement results are transmitted to the donor base station, where the measurement results are available to the base station which in turn compares its own measurement result with the received measurement results transmitted from respective relay node devices and determines nodes performing cooperative transmission for the user equipment according to the comparison result.

A system for determining cooperative transmission nodes according to an embodiment of the invention includes a base station and at least one relay node device subordinated to the base station, where:

the base station is configured to transmit uplink signal configuration information for a user equipment to the user equipment and the respective relay node devices subordinated to the base station, to receive an uplink signal transmitted from the user equipment according to the uplink signal configuration information and measure the uplink signal, and to compare its own measurement result with the acquired measurement results of the respective relay node devices and determine nodes performing cooperative transmission for the user equipment according to the comparison result; and

the relay node device is configured to receive the uplink signal transmitted from the user equipment according to the uplink signal configuration information and to transmit the measurement result of measuring the uplink signal to the base station.

Each of the relay node device is further configured to set its own period of time corresponding to time location information in the uplink signal configuration information to a reception status with respect to the user equipment after receiving the uplink signal configuration information for the user equipment from the base station and before measuring the uplink signal transmitted from the user equipment, and to receive the uplink signal transmitted from the user equipment in the reception status with respect to the user equipment.

The base station and the relay node device in the system can perform the functions of the base station and the relay node devices in the embodiment of the method illustrated in Fig. 3 and further determine cooperative transmission nodes, and a repeated description thereof will be omitted here.

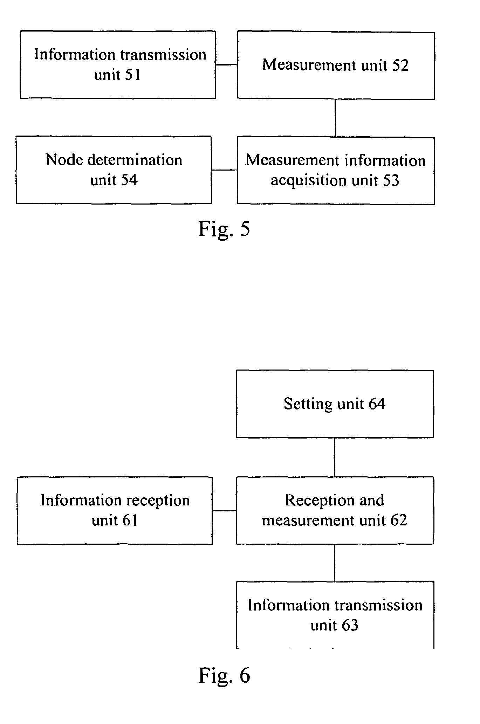

Referring to Fig. 5, a base station according to an embodiment of the invention, which is a device for determining cooperative transmission nodes, may include an information transmission unit 51, a measurement unit 52, a measurement information acquisition unit 53 and a node determination unit 54, where:

the information transmission unit 51 is configured to transmit uplink signal configuration information for a user equipment to the user equipment and respective relay node devices, where the uplink signal configuration information may be transmitted directly to the user equipment and available to the respective relay node devices for listening to during direction transmission thereof so that the relay node devices can receive an uplink signal of the user equipment according to the uplink signal configuration information, or the uplink signal configuration information for the user equipment can be transmitted respectively to the user equipment and the respective relay node devices;

the measurement unit 52 is configured to receive the uplink signal transmitted from the user equipment according to the uplink signal configuration information and to measure the uplink signal;

the measurement information acquisition unit 53 is configured to receive the measurement results transmitted from the respective relay node devices, where the measurement results transmitted from the respective relay node devices are measurement results of measuring by the respective relay node devices the received uplink signal transmitted from the user equipment; and

the node determination unit 54 is configured to compare the measurement result of the measurement unit with the acquired measurement results of measuring the uplink signal by the respective relay node devices and to determine nodes performing cooperative transmission for the user equipment according to the comparison result.

Furthermore the measurement information acquisition unit 53 can receive directly the measurement results of the respective relay node devices or transmit a measurement result request to the respective relay node devices and receive the measurement results returned from the respective relay node devices in response to the measurement result request.

The node determination unit 54 can further be configured, when the measurement result is the received power of the uplink signal, to determine node devices with the received powers of the uplink signal higher than a preset power threshold as node devices performing cooperative transmission for the user equipment, or to order the received powers of the uplink signal measured by the respective node devices and select a preset number of node devices in a descending order of the powers as node devices performing cooperative transmission for the user equipment.

The node determination unit 54 can be configured, when the measurement result is the received signal-to-noise ratio of the uplink signal, to determine nodes with the received signal-to-noise ratio of the uplink signal above a preset received signal-to-noise ratio threshold as node devices performing cooperative transmission for the user equipment, or to order the received signal-to-noise ratios of the uplink signal measured by the respective nodes and select a preset number of nodes in a descending order of the ratios as node devices performing cooperative transmission for the user equipment.

The node determination unit 54 can further be configured to determine a scheme in which the nodes performing cooperative transmission for the user equipment transmit data to the user equipment, according to its own measurement result and the acquired measurement results of the respective relay node devices.

The node determination unit 54 can further be configured to determine nodes for transmitting a downlink control channel to the user equipment and a transmission scheme thereof according to its own measurement result and the acquired measurement results of the respective relay node devices.

The base station can further include a setting unit configured to set a period of time corresponding to time location information in the uplink signal configuration information to a reception status with respect to the user equipment. Thus the measurement unit 52 can be configured to receive the uplink signal transmitted from the user equipment in the reception status with respect to the user equipment.

Referring to Fig. 6, a relay node device according to an embodiment of the invention, which is a device for determining cooperative transmission nodes, may include an information reception unit 61, a reception and measurement unit 62 and an information transmission unit 63, where:

the information reception unit 61 is configured to receive uplink signal configuration information for a user equipment transmitted from a base station;

the reception and measurement unit 62 is configured to receive an uplink signal transmitted from the user equipment according to the uplink signal configuration information and to measure the uplink signal; and

the information transmission unit 63 is configured to transmit the measurement result to the base station, where the measurement result is available to the base station which in turn compares its own measurement result with the received measurement results transmitted from respective relay node devices and determines nodes performing cooperative transmission for the user equipment according to the comparison result.

The information transmission unit 63 is configured to transmit the measurement result to the base station in response to a received measurement result request from the base station.

The node device may further include a setting unit 64 configured to set a period of time corresponding to time location information in the uplink signal configuration information to a reception status with respect to the user equipment, and then the reception measurement unit may be configured to receive the uplink signal transmitted from the user equipment in the reception status with respect to the user equipment.

The information reception unit may be configured to acquire the uplink signal configuration information by listening to control signaling transmitted from the donor base station to the user equipment, which includes the uplink signal configuration information for the user equipment, or to receive directly the uplink signal configuration information for the user equipment transmitted from the donor base station.

In the embodiments of the invention, the user equipment transmits an uplink signal; the base station and the relay node devices subordinated to the base station receive the uplink signal, and measure the received uplink signal; and an optimum set of node devices participating in cooperation are determined according to the measurement results. The method can adjust in real time an optimum set of cooperative transmission nodes for a user equipment and further ensure a more optimized use of system resources, guarantee a quality of communication for the user equipment and perform cooperative transmission transparent to the user equipment.

Evidently those skilled in the art may make various modifications and variations to the invention without departing from the scope of the invention. Thus the invention is also intended to encompass these modifications and variations thereto so long as the modifications and variations come into the scope of the claims appended to the invention and their equivalents.

## Claims

1. A method for determining cooperative transmission nodes, comprising:
transmitting, by a base station, uplink signal configuration information for a user equipment to the user equipment and respective relay node devices subordinated to the base station;
receiving, by the base station and the respective relay node devices, an uplink signal transmitted from the user equipment according to the uplink signal configuration information and measuring, by the base station and the respective relay node devices, the uplink signal; and
comparing a result of the measuring by the base station with results of the measuring by the respective relay node devices and determining nodes participating in cooperative transmission for the user equipment according to a result of the comparing.

2. The method of claim 1, wherein the uplink signal configuration information is uplink SRS signal configuration information comprising one or more of:
SRS transmission time configuration information, SRS sequence configuration information, SRS transmission bandwidth configuration information, SRS transmission sub-carrier configuration information and SRS frequency-hopping configuration information.

3. The method of claim 1, further comprising: after the base station transmits the uplink signal configuration information for the user equipment to the respective relay node devices subordinated to the base station and before the base station measures the uplink signal transmitted from the user equipment,
setting, by the base station and the respective relay node devices, their own periods of time corresponding to time configuration information in the uplink signal configuration information to a reception status with respect to the user equipment.

4. The method of claim 1, wherein transmitting by a base station uplink signal configuration information for a user equipment to the user equipment and respective relay node devices subordinated to the base station comprises:
transmitting, by the base station, control signaling comprising the uplink signal configuration information for the user equipment to the user equipment, and listening to, by the respective relay node devices subordinated to the base station, the control signaling to acquire the uplink signal configuration information; or
transmitting, by the base station, the uplink signal configuration information for the user equipment respectively to the user equipment and the respective relay node devices subordinated to the base station.

5. The method of claim 1, wherein the nodes participating in cooperative transmission for the user equipment comprises the base station, or the base station and at least one of the relay node devices, or at least one of the relay node devices.

6. The method of claim 1, further comprising:
transmitting, by the respective relay node devices, the results of measuring the uplink signal by the respective relay node devices to the base station, wherein:
the base station performs the operation of comparing the result of the measuring by the base station with the results of the measuring by the respective relay node devices.

7. The method of claim 1, wherein determining nodes participating in cooperative transmission for the user equipment according to a result of the comparing comprises: when a result of the measuring is a received power of the uplink signal,
determining nodes with measured received powers of the uplink signal higher than a preset power threshold as the nodes participating in cooperative transmission for the user equipment; or
ordering received powers of the uplink signal measured by the respective nodes and selecting a preset number of nodes in a descending order of the powers as the nodes participating in cooperative transmission for the user equipment.

8. The method of claim 1, wherein determining nodes participating in cooperative transmission for the user equipment according to a result of the comparing comprises: when a result of the measuring is a received signal-to-noise ratio of the uplink signal,
determining nodes with received signal-to-noise ratios of the uplink signal higher than a preset received signal-to-noise ratio threshold as the nodes participating in cooperative transmission for the user equipment; or
ordering received signal-to-noise ratios of the uplink signal of the respective nodes and selecting a preset number of nodes in a descending order of the ratios as the nodes participating in cooperative transmission for the user equipment.

9. The method of claim 1, further comprising: after determining nodes participating in cooperative transmission for the user equipment according to a result of the comparing,
determining a scheme in which the nodes participating in cooperative transmission for the user equipment transmits data to the user equipment according to the result of the measuring by the base station and acquired results of the measuring by the respective relay node devices.

10. The method of claim 1, further comprising: after determining nodes participating in cooperative transmission for the user equipment according to a result of the comparing,
determining nodes transmitting a downlink control channel to the user equipment and a specific transmission scheme thereof according to the result of the measuring by the base station and acquired results of the measuring by the respective relay node devices.

11. A system for determining cooperative transmission nodes, comprising a base station and at least one relay node device subordinated to the base station, wherein:
the base station is configured to transmit uplink signal configuration information for a user equipment to the user equipment and the respective relay node devices subordinated to the base station, to receive an uplink signal transmitted from the user equipment according to the uplink signal configuration information and measure the uplink signal, and to compare its own measurement result with acquired measurement results of the respective relay node devices and determine nodes participating in cooperative transmission for the user equipment according to a comparison result; and
the respective relay node devices are configured to receive the uplink signal transmitted from the user equipment according to the uplink signal configuration information and to transmit the measurement results of measuring the uplink signal to the base station.

12. The system of claim 11, wherein the respective relay node devices are further configured to set their own periods of time corresponding to time location information in the uplink signal configuration information to a reception status with respect to the user equipment after receiving the uplink signal configuration information for the user equipment from the base station and before measuring the uplink signal transmitted from the user equipment, and to receive the uplink signal transmitted from the user equipment in the reception status with respect to the user equipment.

13. A method for determining cooperative transmission nodes, comprising:
transmitting, by a base station, uplink signal configuration information for a user equipment to the user equipment and respective relay node devices subordinated to the base station, wherein the uplink signal configuration is available to the respective relay node devices for their reception of an uplink signal of the user equipment; and
measuring, by the base station, the uplink signal transmitted from the user equipment, which is received according to the uplink signal configuration information, comparing, by the base station, its own result of the measuring with received results of measuring transmitted from the respective relay node devices and determining, by the base station, nodes participating in cooperative transmission for the user equipment according to a result of the comparing,
wherein the results of measuring transmitted from the respective relay node devices are results of measuring by the respective relay node devices the received uplink signal transmitted from the user equipment.

14. The method of claim 13, wherein the uplink signal configuration information is uplink SRS signal configuration information comprising one or more of:
SRS transmission time configuration information, SRS sequence configuration information, SRS transmission bandwidth configuration information, SRS transmission sub-carrier configuration information and SRS frequency-hoping configuration information.

15. The method of claim 13, further comprising: after the base station transmits the uplink signal configuration information for the user equipment to the user equipment and the respective relay node devices subordinated to the base station and before the base station measures the uplink signal transmitted from the user equipment,
setting, by the base station, its own period of time corresponding to time configuration information in the uplink signal configuration information to a reception status with respect to the user equipment, and then receiving the uplink signal transmitted from the user equipment in the reception status with respect to the user equipment.

16. The method of claim 13, wherein transmitting by a base station uplink signal configuration information for a user equipment to the user equipment and respective relay node devices subordinated to the base station comprises:
transmitting, by the base station, control signaling comprising the uplink signal configuration information for the user equipment to the user equipment, wherein the control signaling is available to the respective relay node devices subordinated to the base station through listening to by the respective relay node devices the control signaling, so that the uplink signal configuration information is acquired by the respective relay node devices; or
transmitting, by the base station, the uplink signal configuration information for the user equipment respectively to the user equipment and the respective relay node devices subordinated to the base station.

17. The method of claim 13, wherein determining nodes participating in cooperative transmission for the user equipment according to a result of the comparing comprises: when a result of the measuring is a received power of the uplink signal,
determining nodes with measured received powers of the uplink signal higher than a preset power threshold as the nodes participating in cooperative transmission for the user equipment; or
ordering received powers of the uplink signal measured by the respective nodes and selecting a preset number of nodes in a descending order of the powers as the nodes participating in cooperative transmission for the user equipment.

18. The method of claim 13, wherein determining nodes participating in cooperative transmission for the user equipment according to a result of the comparing comprises: when the result of the measuring is a received signal-to-noise ratio of the uplink signal,
determining nodes with received signal-to-noise ratios of the uplink signal higher than a preset received signal-to-noise ratio threshold as the nodes participating in cooperative transmission for the user equipment; or
ordering received signal-to-noise ratios of the uplink signal of the respective nodes and selecting a preset number of nodes in a descending order of the ratios as the nodes participating in cooperative transmission for the user equipment.

19. The method of claim 13, further comprising: after determining nodes participating in cooperative transmission for the user equipment according to a result of the comparing,
determining a scheme in which the nodes participating in cooperative transmission for the user equipment transmits data to the user equipment according to the result of the measuring by the base station and acquired results of the measuring by the respective relay node devices.

20. The method of claim 13, further comprising: after determining nodes participating in cooperative transmission for the user equipment according to a result of the comparing,
determining nodes transmitting a downlink control channel to the user equipment and a specific transmission scheme thereof according to the result of the measuring by the base station and acquired results of the measuring by the respective relay node devices.

21. The method of claim 13, wherein the nodes participating in cooperative transmission for the user equipment comprises the base station, or the base station and at least one relay node device, or at least relay node device.

22. A base station, comprising:
an information transmission unit configured to transmit uplink signal configuration information for a user equipment to the user equipment and respective relay node devices, wherein the uplink signal configuration information is available to the respective relay node devices for their reception of an uplink signal of the user equipment;
a measurement unit configured to receive the uplink signal transmitted from the user equipment according to the uplink signal configuration information and to measure the uplink signal;
a measurement information acquisition unit configured to receive measurement results transmitted from the respective relay node devices, wherein the measurement results transmitted from the respective relay node devices are measurement results of measuring by the respective relay node devices the received uplink signal transmitted from the user equipment; and
a node determination unit configured to compare a measurement result of the measurement unit with acquired measurement results of measuring the uplink signal by the respective relay node devices and to determine nodes participating in cooperative transmission for the user equipment according to a comparison result.

23. The base station of claim 22, wherein the node determination unit is configured, when a measurement result is a received power of the uplink signal, to determine nodes with a measured received power of the uplink signal higher than a preset power threshold as the nodes participating in cooperative transmission for the user equipment, or to order received powers of the uplink signal measured by the respective nodes and select a preset number of nodes in a descending order of the powers as the nodes participating in cooperative transmission for the user equipment.

24. The base station of claim 22, wherein the node determination unit is configured, when a measurement result is a received signal-to-noise ratio of the uplink signal, to determine nodes with a received signal-to-noise ratio of the uplink signal higher than a preset received signal-to-noise ratio threshold as the nodes participating in cooperative transmission for the user equipment, or to order received signal-to-noise ratios of the uplink signal of the respective nodes and select a preset number of nodes in a descending order of the ratios as the nodes participating in cooperative transmission for the user equipment.

25. The base station of claim 22, wherein the node determination unit is further configured to determine a scheme in which nodes participating in cooperative transmission for the user equipment transmits data to the user equipment, according to the measurement result of the measurement unit and acquired measurement results of the respective relay node devices.

26. The base station of claim 22, wherein the node determination unit is further configured to determine nodes for transmitting a downlink control channel to the user equipment and a transmission scheme thereof according to the measurement result of the measurement unit and acquired measurement results of the respective relay node devices.

27. The base station of claim 22, further comprising:
a setting unit configured to set a period of time corresponding to time configuration information in the uplink signal configuration information for the user equipment to a reception status with respect to the user equipment after the uplink signal configuration information is transmitted to the respective relay node devices and before the uplink signal transmitted from the user equipment is measured.

28. A method for determining cooperative transmission nodes, comprising:
receiving, by a relay node device, an uplink signal of a user equipment according to uplink signal configuration information for the user equipment after acquiring the uplink signal configuration information; and
measuring the uplink signal, and transmitting a result of the measuring to a donor base station, wherein the result of the measuring is available to the base station which in turn compares its own result of measuring with received results of measuring transmitted from respective relay node devices and determines nodes participating in cooperative transmission for the user equipment according to a comparison result.

29. The method of claim 28, further comprising: after the relay node device receives the uplink signal configuration information for the user equipment and before the relay node device receives the uplink signal transmitted of the user equipment according to the uplink signal configuration information,
setting, by the relay node device, its own period of time corresponding to time configuration information in the uplink signal configuration information to a reception status with respect to the user equipment, and then receiving, by the relay node device, the uplink signal transmitted from the user equipment in the reception status with respect to the user equipment.

30. The method of claim 28, wherein the relay node device acquires the uplink signal configuration information by listening to control signaling transmitted from the donor base station to the user equipment, which comprises the uplink signal configuration information for the user equipment, or receives directly the uplink signal configuration information for the user equipment transmitted from the donor base station.

31. The method of claim 28, wherein the uplink signal configuration information is uplink SRS signal configuration information comprising one or more of:
SRS transmission time configuration information, SRS sequence configuration information, SRS transmission bandwidth configuration information, SRS transmission sub-carrier configuration information and SRS frequency-hopping configuration information.

32. A relay node device, comprising:
an information reception unit configured to receive uplink signal configuration information for a user equipment transmitted from a base station;
a reception and measurement unit configured to receive an uplink signal transmitted from the user equipment according to the uplink signal configuration information and to measure the uplink signal; and
an information transmission unit configured to transmit a measurement result to the base station, wherein the measurement result is available to the base station which in turn compares its own measurement result with received measurement results transmitted from respective relay node devices and determines nodes participating in cooperative transmission for the user equipment according to a comparison result.

33. The relay node device of claim 32, further comprising:
a setting unit configured to set a period of time corresponding to time configuration information in the uplink signal configuration information to a reception status with respect to the user equipment, wherein:
the reception and measurement unit is configured to receive the uplink signal transmitted from the user equipment in the reception status with respect to the user equipment.

34. The relay node device of claim 32, wherein the information reception unit is configured to acquire the uplink signal configuration information by listening to control signaling transmitted from the donor base station to the user equipment, which comprises the uplink signal configuration information for the user equipment, or to receive directly the uplink signal configuration information for the user equipment transmitted from the donor base station.
